# EUROPEAN PATENT APPLICATION

(11) **EP 3 086 002 A1**
(43) Date of publication of application: **26.10.2016**
(21) Application number: 16166370.3
(22) Date of filing: 21.04.2016
(51) Int. Cl.: F16J 15/02

(54) **IMPROVE SEALING GASKET**

(30) Priority: 23.04.2015 ES 201530551
(71) Applicant: Hidro Rubber Iberica, S.A., 31770 Lesaka (Navarra) (ES)
(72) Inventor: ANGULO LACARTA, Jon, 31770 Lesaka (Navarra) (ES)
(74) Representative: Codoñer Molina, Vicente

(57) **Abstract**

Improved sealing gasket, consisting of a gasket with a high performance in sealing tightness, mechanical strength, chemical resistance and impermeability, for the implementation of different types and structures of sealing, lids, caps and other, combining an elastomeric material (2) and a thermoplastic material (1) injected or manufactured by moulding and mechanically bonded together, or by means of an adhesive substance, so that the elastomeric material (2) is mainly used in the hermetic sealing area of the gasket while the thermoplastic material (1) is used in the main body of the gasket structure. The thermoplastic material will improve the permeability properties, thereby obtaining gaskets with permeability values which are very low or even zero, at a very favourable cost. Finally, this gasket easily fulfils the requirements of the various regulations concerning the sealing of tanks and pipelines for fuel and chemical materials with a given abrasiveness.

## Description

### Object of the Invention

The present invention relates to a gasket made of two materials, a thermoplastic material and an elastomeric material or rubber, in order to achieve gaskets with a high performance and low cost, by combining both materials.

That is why the invention presented will appeal to the industry engaged in the manufacture of parts for seals with rubber and elastomer gaskets, especially for sealing tanks or pipelines for fuel and chemical materials with a given abrasiveness.

### State of the Art

The use of elastomeric materials and rubber for gaskets has been known for some time, because these materials are ideal due to their elastic characteristics, which always guarantee proper sealing tightness.

Thus, for example, European Patent No. 98830589 "Elastomeric sealing gasket for cooking ovens, belonging to the Italian firm POSA SpA with a 1998 priority, illustrates an elastomeric sealing gasket particularly made of silicone rubber, particularly for doors of cooking ovens.

Elastomeric materials also, generally offer good elastic properties, good chemical resistance, preferably fluoelastomers or nitriles, however their high cost means that for certain applications, such as caps for fuel tanks, plastic materials are preferred, which in addition to presenting good chemical resistance, for example against combustible substances, have low permeability, preferably fluoroplastics or EVOH.

Thus, since thermoplastic materials with permeability levels similar to those of rubber, have much more economical prices, these are preferred in many applications despite having poorer elastic properties and achieving a poorer sealing tightness, important qualities when used as material for making gaskets.

The invention described below presents an innovative gasket in which, by using a combination of two different materials, a plastic material and an elastomer in the manufacturing process, a high performance in sealing tightness is achieved while the cost becomes cheaper as the amount of elastomer used is reduced and also achieving high chemical resistance and impermeability in the sealing of tanks, deposits or pipelines for fuels and chemical materials with a given abrasiveness, gasolines and chemicals.

### Description of the Invention

The present invention for an improved sealing gasket is formed by a high performance gasket, especially having the following characteristics:
- Hermetic sealing
- Mechanical strength
- Chemical resistance
- Impermeability

Such gasket may be used in the implementation of different types and structures of sealing, lids, caps and other, especially when they are to be used in installations of products in which any of the preceding features are required, such as the sealing of tanks or pipelines for fuel and chemical materials of a given abrasiveness.

The gaskets made of thermoplastic material, have the advantage of providing high mechanical resistance as compared to rubbers, but less elasticity. However, the combination of an elastomeric material with a thermoplastic material makes the gasket elastic ensuring a good sealing tightness, and a good seal, thanks to the properties of the elastomeric material and of the design of the plastic part.

The thermoplastic material will improve the permeability properties, thereby obtaining gaskets with very low permeability values or even zero, at a very favourable cost.

Moreover, different combinations of both thermoplastics and rubbers are possible depending on the needs of each client or project. Thus, for example it is possible to satisfy the requirements demanded for gasket characteristics in the various existing laws and regulations, where appropriate, on fuels and other chemicals.

Thus, in the implementation of gasket structures, the elastomeric material will be applied in the sealing area, while the thermoplastic material will act as a barrier or body of the structure.

Also because thermoplastic materials with levels of permeability similar to those of rubber have a lower cost, the invention described herein represents an economical solution in those situations in which extremely low levels of permeability are pursued.

The structure of the improved sealing gasket described is formed by a main body of thermoplastic material, which functions as a lid or cap, whose perimeter finish is of elastomeric material, forming the hermetic seal area.

Thus, with the elastomeric material we aim to achieve elastic properties combined with good chemical resistance, preferably fluoelastomers or nitriles, while with the plastic material we aim to achieve properties of a good chemical resistance for example against combustible substances, with low permeability, preferably fluoroplastics or EVOH.

According to the improved sealing gasket thus described, the plastic component is moulded in a first step and the rubber part is overmoulded in a second step, thus in the product obtained the rubber and plastic material are bonded mechanically, while not discarding the possibility of adding an adhesive for this purpose, if necessary

### Description of a Preferred Embodiment

Described below by way of example is a preferred embodiment of the improved sealing gasket, which is illustrated in the following drawings

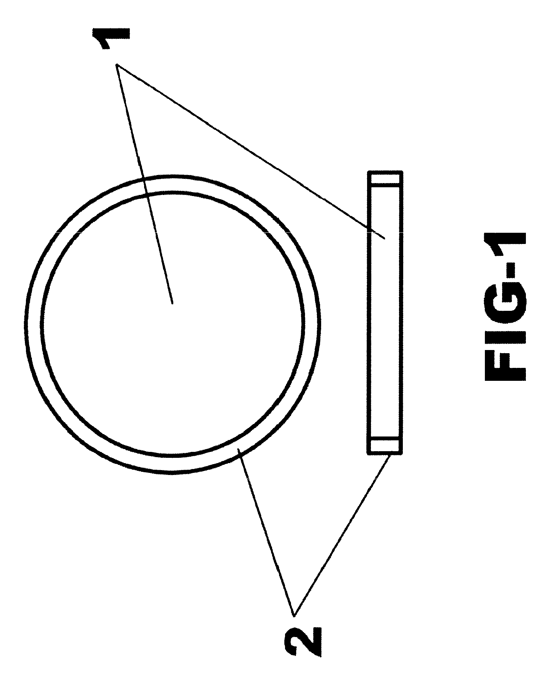

Figure 1 shows an elevation and side view of an example of improved sealing gasket.

The gasket described is preferably used for sealing tanks or pipelines for fuels and chemicals with a given abrasiveness, so the preferred form is often in this case circular.

The body of this structure is made of thermoplastic material (1), so that the peripheral area where it hermetically seals to the mouth of the tank or of the pipelines is made of elastomeric material (2), which has enhanced elastic characteristics.

Thus a gasket of high strength and sealing tightness is achieved in a wide range of temperatures, of the order of -50 ° C to + 300 ° C, as well as high mechanical strength thanks to the thermoplastic material of the gasket body and high resistance to chemical agents, due to the materials used.

By combining the use of two different materials, the cost of the gasket is reduced, as the cost of thermoplastics is known to be more economical compared to rubber.

The part can be implemented by injection or moulding, in two steps, of the different materials. Thus both materials, a thermoplastic material and an elastomer material, are welded together.

However depending on the type of thermoplastic and elastomer materials employed, the use of a special adhesive may be required to achieve certain mechanical strength when needed.

Further detail of this description is not considered necessary in order to be understood by one skilled in the art for the purpose of being able to assess its scope and the advantages derived thereof, as well as putting into practice the implementation of the object thereof.

Notwithstanding the foregoing, and considering that the above description only relates to one preferred embodiment, it is understood that within its essence, modifications and variations in detail may be introduced as appropriate, also falling within the scope of the invention, and which may affect in particular characteristics such as the shape or size of the gasket described, or any other characteristics that do not alter the invention as described and as defined in the following claims.

## Claims

1. Improved sealing gasket, consisting of a gasket of high performance in sealing tightness, mechanical strength, chemical resistance and impermeability, for the implementation of different types and structures of sealing, lids, caps and others, preferably for the sealing of tanks or pipelines for fuel and chemicals with a given abrasiveness, **characterized in that** it is made by a combination of an elastomeric material and a thermoplastic material, injected or manufactured by moulding, mechanically bonded so that the elastomeric material (2) is mainly used in the hermetic sealing area of the gasket and the thermoplastic material (1) in the main body of the structure of the gasket.

2. Improved sealing gasket, according to the first claim, **characterized in that** the thermoplastic material (1) has high permeability properties, whereby the permeability values of the gasket are very low or even zero.

3. Improved sealing gasket, according to at least any of the preceding claims, **characterized in that** it is possible to implement different combinations both of the thermoplastic materials (1) and of the rubbers or elastomers (2), depending on the needs of each gasket design and characteristics of mechanical strength and resistance to chemicals required.

4. Improved sealing gasket, according to at least any of the preceding claims, **characterized in that** the rubber or elastomer (2) and the thermoplastic material (1) are bonded by means of a substance, adhesive or otherwise, applied in the manufacturing process.
